# EUROPEAN PATENT APPLICATION

(11) **EP 1 197 831 A2**
(43) Date of publication of application: **17.04.2002**
(21) Application number: 01121262.8
(22) Date of filing: 05.09.2001
(51) Int. Cl.: G06F 1/16

(54) **Data-processing apparatus**

(30) Priority: 02.10.2000 JP 2000302667
(71) Applicant: Kabushiki Kaisha Toshiba, Minato-ku, Tokyo 105 (JP)
(72) Inventor: Kaneko, Taizo, Minato-ku, Tokyo 105-8001 (JP); Saito, Kazuyuki, Minato-ku, Tokyo 105-8001 (JP); Tajima, Yoshihiro, Minato-ku, Tokyo 105-8001 (JP)
(74) Representative: Henkel, Feiler, Hänzel

(57) **Abstract**

A display housing (2) coupled to a PC housing (1) of a notebook PC can be opened and closed with respect to the PC housing (1). A display panel (5) is provided in the front (2a) of the display housing (2). Card-holding sections (6a, 6b, ···) are provided in the right-side part of the front (2a). Each card-holding section has a recess (7) opening at the front (2a). An elastic strip (8) is provided at the lower edge of each card-holding section. Contacts (9) are provided at the upper edge of the each card-holding section. To insert a SD card (20), which has a connector (21), into any card-holding section, the user pushes the SD card (20) onto the elastic strip (8), at the lower edge (24) of the card (20), until the card (20) is fitted into the recess (7). Thereafter, the elastic strip (8) biases the card (20) upwards, keeping the connector (21) in the contacts (9) provided at the upper edge of the card-holding section.

## Description

The present invention relates to a data-processing apparatus such as a notebook-type personal computer (hereinafter referred to as "notebook PC.") More particularly, the invention relates to a notebook PC that can use a card-shaped extension device such as a memory card.

Most notebook PCs comprise a PC housing, a display housing and a keyboard. The PC housing contains a CPU and has a card slot in one side. The display housing is coupled to the PC housing and can be rotated between an opened position and a closed position. The display housing holds a liquid crystal display (LCD) panel for displaying various data items. The keyboard is provided on the upper surface of the PC housing. The display housing covers the keyboard while it remains in the closed position. A card-shaped extension device such as a memory card can be inserted into the PC housing through the card slot.

In recent years it has been increasingly demanded that the PC housing of the notebook PC be made thinner. At present it is difficult for the PC housing to have a card slot.

The conventional notebook PC uses utility software to determine the condition of the card slot before the presence or absence of a card in the card slot is detected, the type of the card inserted in the slot is determined or the contents of the card is identified. The liquid crystal display of the PC displays the information representing the condition of the card slot, thus determined. It takes rather a long time to determine and display the condition of the card slot.

The conventional notebook PC has a card slot in a relatively low position. If a card having radio communication function is inserted into the card slot, it transmits radio waves but at a low efficiency due to the low position of the card.

A card incorporating a fingerprint sensor a camera SD card having a lens on one surface, or the like cannot be used in the conventional notebook PC.

The present invention has been made in view of the foregoing. An object of the invention is to provide a data-processing apparatus which can be easily made small and thin, which can easily determine the type of the card being used in it, which can transmit radio waves high efficiency if it incorporates a card having radio communication function, and which can use a card with a sensor or the like provide on a surface.

A data-processing apparatus according to an aspect of the invention comprises: a data-processing apparatus comprising: a main housing having an input device on a surface; a display housing connected to the main housing and configured to rotate between a closed position and an opened position, the display housing covering the input device while remaining at the closed position and exposing the input device while remaining at the opened position; a card-holding section provided in the surface of the display housing, for holding a card; and contacts provided in the card-holding section and configured to contact a connector provided on the card.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a perspective view of a notebook PC according to the first embodiment of the present invention;
FIG. 2 is a magnified front view of the card-holding section provided in the display housing of the notebook PC shown in FIG. 1;
FIG. 3 is a perspective view of an SD card that may be inserted into the card-holding section shown in FIG. 2;
FIG. 4 is a perspective view of an SD card comprising various sensors;
FIG. 5 is a perspective view of an SD card comprising a CCD camera;
FIG. 6 is a perspective view of a notebook PC according to the second embodiment of the invention;
FIG. 7 is a magnified perspective view of the card-holding section provided in the notebook PC illustrated in FIG. 6;
FIG. 8 is a perspective view showing the card-holding section, an SD card and a cover, all pertaining to the third embodiment of the present invention;
FIG. 9 is a perspective view of a modification of the card-holding section illustrated in FIG. 8;
FIG. 10 depicts a modification of the cover shown in FIG. 8;
FIG. 11 shows a cover equipped with a radio antenna;
FIG. 12 is a perspective view, illustrating how an SD card is connected to a radio antenna in a specific way;
FIG. 13 is a perspective view, showing how an SD card is connected to a radio antenna in another way; and
FIG. 14 is a perspective view, illustrating a display housing and two card-holding sections provided in the two opposing surfaces of the display housing, respectively.

Embodiments of the present invention will be described, with reference to the accompanying drawings.

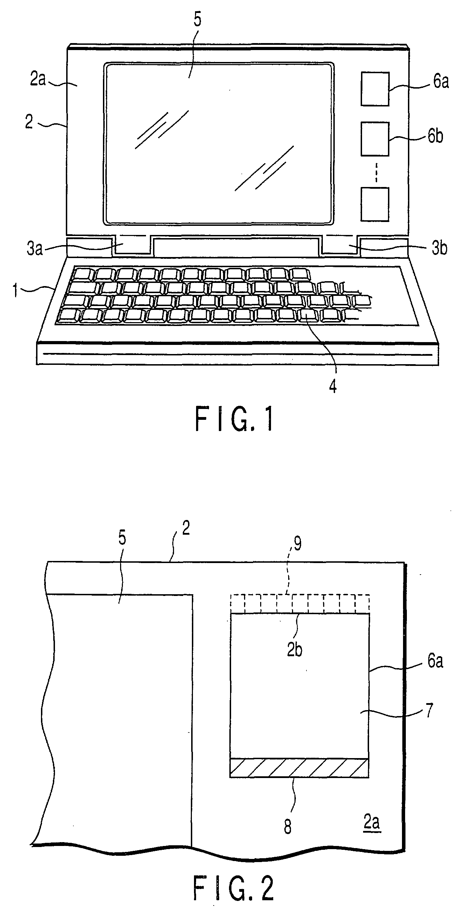

FIG. 1 is a perspective view of a notebook PC, or a data-processing apparatus according to the first embodiment of the invention,

As FIG. 1 shows, the notebook PC comprises a PC housing 1 (a main housing), a display housing 2, two hinges 3a and 3b, and a keyboard 4 (an input device). The PC housing 1 contains a CPU. The display housing 2 serves as a cover for the PC housing 1. The hinges 3a and 3b couple the display housing 2 to the rear side of the PC housing 1. The keyboard 4 is provided on the upper surface of the PC housing 1. The display housing 2 can be rotated between an opened position and a closed position. In the closed position, the display housing 2 covers the keyboard 4.

As FIG. 1 shows, a display panel 5, such as an LCD, is provided on the inner surface, or front 2a of the display housing 2. Card-holding sections 6a, 6b, ··· (hereinafter, generally referred to as "card-holding section 6") are provided on the right-side part of the front 2a, spaced apart in the vertical direction. The sections 6a, 6b, ··· are oriented, each with the longer sides vertically aligned.

The card-holding section 6 may be arranged on the left-side part, upper part or lower part of the front 2a. Further, the section 6 may be orientated in any direction other than is shown in FIG. 1.

FIG. 2 is a magnified front view of the card-holding section 6 that is located above any other card-holding sections. The section 6 has a rectangular recess 7, which such has a size fit for holding an SD (Secure Digital) card. The recess 7 opens at the front 2a of the display housing 2. An elastic strip 8, such as a leaf spring, horizontally stretches at the lower edge of the recess 7. Contacts 9 are arranged in a horizontal row, at the upper edge of the recess 7. The contacts 9 will be electrically connected to the SD card when the SD card is fitted in the recess 7. A projecting part 2b of the display housing 2 covers the row of contacts 9. The projecting part 2b holds the upper edge of the SD card as long as the SD card remains in the recess 7.

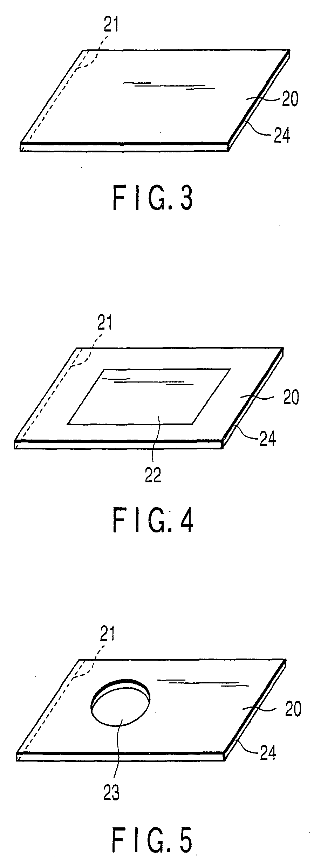

FIG. 3 shows an SD card 20 that has a card connector 21 at its upper edge. To fit the SD card 20 into the card-holding section 6, the user pushes the SD card 20, with the lower edge thereof contacting and pressing the elastic strip 8 downwards, until the SD card 20 is completely placed in the recess 7. Once the card 20 is completely set in the recess 7, the elastic strip 8 pushes the card 20 until the card connector 21 contacts the contacts 9. Then, the projecting part 2b of the display housing 2 holds the upper part of the SD card 20, preventing the SD card 20 from slipping out of the card-holding section 6.

When the SD card 20 is inserted into the card-holding section 6, however, it may fail to be reliably connected to the contacts 9. To ensure reliable connection between the card 20 and the contacts 9, a cover may be provided at the recess 7 to cover the SD card 20 entirely or partly. The cover may be made of transparent material so that the user may see the SD card 20 set in the recess 7 through the cover. Thus, he or she can easily know the presence of the SD card 20 and the type of the SD card 20.

To remove the SD card 20 from the card-holding section 6, the user pushes the card 20 down against the elastic strip 8, moving the upper edge of the card 20 from the projecting part 2b. Alternatively, the SD card 20 may be automatically removed from the section 6 when the card 20 pushed down, moving the elastic strip 8 downward. More specifically, a position detector may be provided to detect whether the elastic strip 8 has been moved down, and a mechanism may be provided to push the card 20 out of the card-holding section 6, thereby to disconnect the connector 21 from the contacts 9.

As described above, the card-holding section 6 is provided in the front 2a of the display housing 2. Hence, if accessories (e.g., a multi-media device such as a camera, and an antenna of a radio communication device), if provided on the display housing 2 are provided, the wires connecting these accessories to the section 6 can be shorter than otherwise. This helps reduce the magnitude loss of the signal transferred between the SD card 20 and the accessories.

In the first embodiment, a plurality of SD cards 20 may be provided in the display housing 2. The PC housing 1 does not need to have card slots as in the conventional notebook PC. Moreover, the display housing 2 need not be made thick to incorporate SD cards 20. The notebook PC according to the first embodiment can therefore be small and thin as is desired.

In addition, the SD card 20 can be inserted and removed into and from the card-holding section 6 more easily than it is inserted into and removed from the PC housing 1 through a card slot as with the conventional notebook PC. This serves to enhance the operability of the notebook PC.

As indicated above, the recess 7 of the card-holding section 6 opens at the front 2a of the display housing 2. The card-holding section 6 can therefore hold not only the ordinary SD card 20 shown in FIG. 3, but also a SD card that has a sensor 22 on one surface as shown in FIG. 4 and a SD card that has a CCD camera 23 as shown in FIG. 5. (Note that the sensor 22 shown in FIG. 4 may be an infrared-ray sensor, a fingerprint sensor or the like.) Namely, the notebook PC of the invention can use card-shaped compact accessories. If the card-holding section 6 holds the SD card 20 of FIG. 5, which has the CCD camera 23, the notebook PC can function as a television telephone.

As indicated above, the card-holding section 6 comprises the elastic strip 8 and the contacts 9, respectively arranged at the lower edge and upper edge of the recess 7. Conversely, the strip 8 and contacts may be provided in the upper edge and lower edge of the recess 7, respectively. Alternatively, the strip 8 and the contacts 9 may be arranged at the left edge and right edge of the recess 7, respectively, or vice versa.

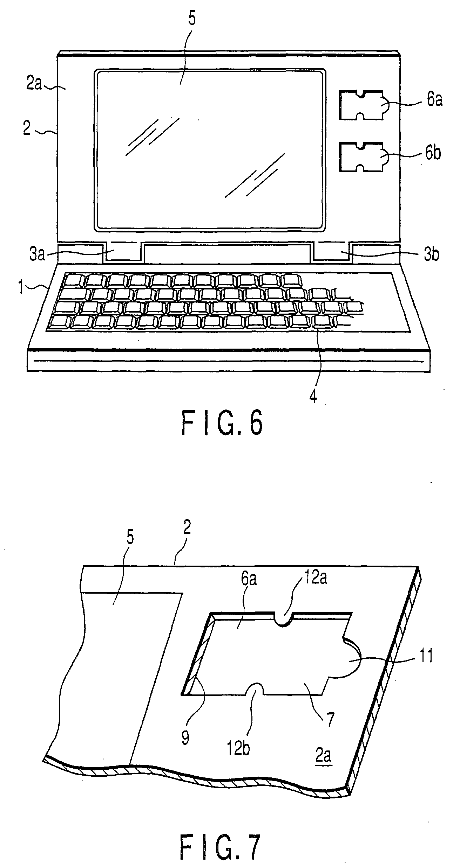

A notebook PC according to the second embodiment of the invention will be described, with reference to FIGS. 6 and 7. FIG. 6 is a perspective view of this notebook PC, and FIG. 7 is a magnified perspective view of a card-holding section 6a provided in the notebook PC. The components of the second embodiment, which are similar or identical to those of the first embodiment, are designated at the same reference numerals and will not described in detail.

In the second embodiment, two card-holding sections 6a and 6b are provided in the right-side part of the front 2a, spaced apart in the vertical direction. The sections 6a and 6b are oriented, each with the longer sides horizontally aligned. As can be understood from FIG. 6, the sections 6a and 6b are identical in shape and structure. Therefore, only the section 6a will be described, with reference to FIG. 7.

As FIG. 7 shows, the card-holding section 6a has a recess 7, contacts 9, and a semicircular notch 11. The contacts 9 are arranged at the left edge of the recess 7. The notch 11 is cut in the right edge of the recess 7. The notch 11 makes it easy for the user to fit and remove a SD card into and from the recess 7. The card-holding section 6a further has two projections 12a and 12b. The projections are integral with the uppermost layer of the display housing 2. They protrude toward each other, from the middle parts of the upper and lower edges of the recess 7.

To fit a SD card 20 of the type shown in FIGS. 3 to 5 into the card-holding section 6a, the user thrusts the SD card 20 from the right edge of the recess 7, into the gap between the bottom of the recess 7 and the projections 12a and 12b. The user further thrusts the card 20 toward the left edge of the recess 7, until the SD card 20 is completely placed in the recess 7. Once completely set in the recess 7, the card 20 is electrically connected to the contacts 9 provided at the left edge of the recess 7. Thereafter, the projections 12a and 12b prevent the SD card 20 from slipping out of the card-holding section 6a.

To remove the SD card 20 from the card-holding section 6, the user may insert a finger into the notch 11, pinch the right edge 24 of the SC card 20, pull the SD card 20 first upwards and then toward the notch 11.

Thus, the second embodiment can achieve the same advantages as the first embodiment.

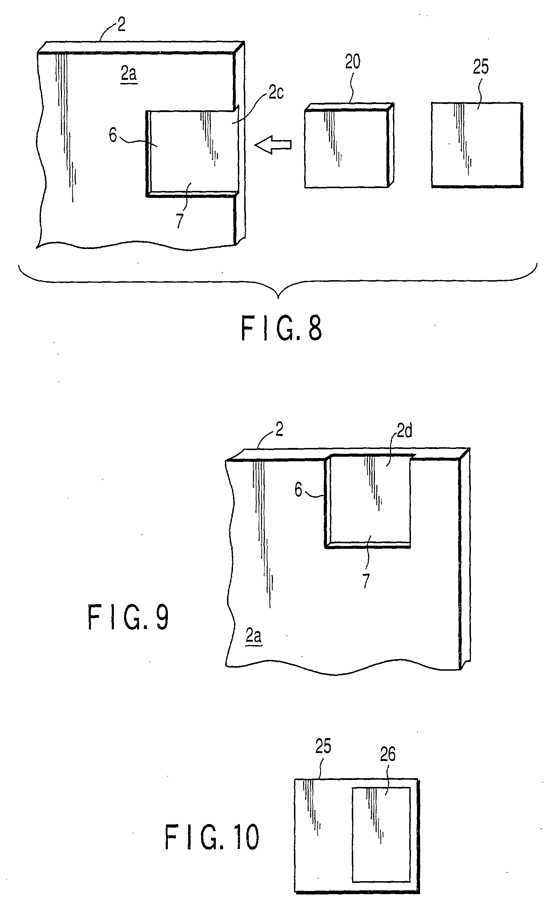

The third embodiment of the invention will be described, with reference to FIG. 8. FIG. 8 shows the card-holding section 6 provided in the front 2a of the display housing 2 and also a SD card and a cover 25. The card-holding section 6 has a recess 7 that opens at the right side 2c and the front 2a of the display housing 2. The SD card 20 may be inserted into the recess 7 from the right edge of the display housing 2, in the direction of the arrow shown in FIG. 8. The cover 25 covers the recess 7 and can be removed to open the recess 7.

In the third embodiment, the card-holding section 6 is located at the right-side part of the display housing 2. Nonetheless, the section 6 may be provided at the left-side part or upper-side part of the display housing 2, with the recess 7 opening at the left side or upper side of the display housing 2. For example, the section 6 may be provided at the upper-side part of the housing 2, with the recess 7 opening at the upper side 2d, as is illustrated in FIG. 9. If this is the case, the SD card can be inserted into the recess 7 from the upper side 2d.

The cover 25 is made of transparent material, translucent material, or tinted translucent material. If the cover 25 is made of transparent material, the user can see, through the cover 25, the label, the vacant storage-area indicator and the status LEDs, all mounted on the SD card 20 fitted in the recess 7. If the cover 25 is made of tinted translucent material of the same color as the characters printed on the label on the SD card 20, any person cannot read the label, though he or she can know that the SD card 20 is fitted in the recess.

As illustrated in FIG. 10, the cover 25 may have a magnifying lens 26. In this case, the lens 26 provides magnified images of the label, vacant storage-area indicator and status LEDs, all mounted on the SD card 20. Hence, the user can read the label and the indicator and see the LEDs, more easily and clearly.

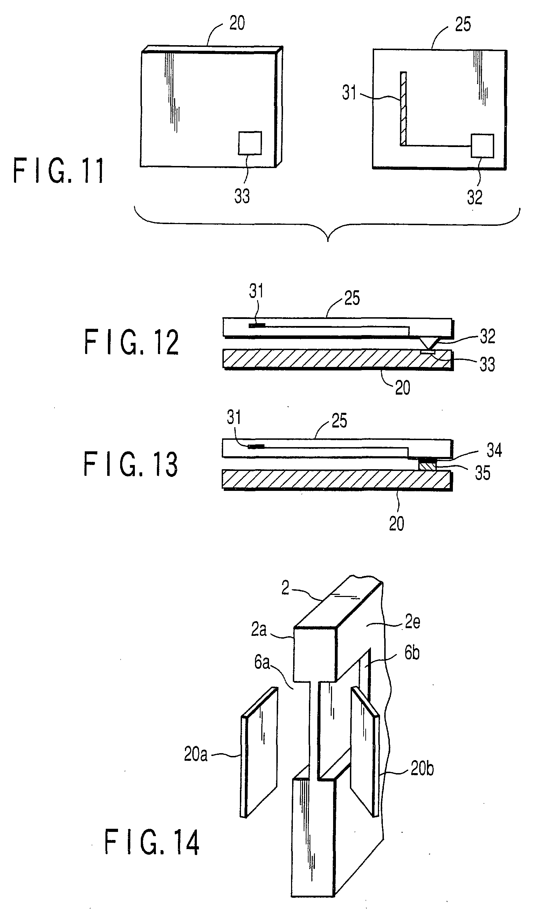

The SD card 20 may have a radio communication function such as Bluetooth. In this case, the cover 25 has a radio antenna 31 and has an antenna contact 32 as shown in FIG. 11. Note that the antenna 31 is exposed on the outer surface of the cover 25 (i.e., front 2a of the housing 2) and that the contact 32 is provided on the inner surface of the cover 25. As shown in FIG. 11, too, the SD card 20 has an antenna-connecting contact 33 on one surface. The antenna contact 32 and an antenna-connecting contact 33 serve to connect the antenna 31 to the SD card 20. It should be noted that the radio antenna 31 is exposed at the front 2a of the display housing 2.

More specifically, the SD card 20 is inserted into the card-holding section 6 and the cover 25 is then attached to the section 6, as shown in FIG. 12. The antenna-connecting contact 32 provided on the cover 25 abuts on the contact 33 provided on the SD card 20. The antenna 31 is thereby connected to the SD card 20.

Once the SD card 20 and the cover 25 having the antenna 31 have been attached to the display housing 2, the notebook PC (i.e., the third embodiment) can perform radio communication with other apparatuses (not shown) at high efficiency.

The contacts 32 and 33 may be replaced by connection contacts 34 and 35 as is illustrated in FIG. 13.

In the third embodiment, only one card-holding section 6 is provided in the front 2a of the display housing 2. Alternatively, two card-holding sections 6a and 6b may be provided in the front 2a and back 2e of the housing 2, respectively, as is illustrated in FIG. 14. In each card-holding section, a SD card is positioned such that the label on it can be seen from outside the display housing 2.

A SD card 20b may be inserted into the card-holding section 6b that is provided in the back 2e of the display housing 2, as is shown in FIG. 14. In this case, the radio antenna 31 provided on the cover 25 remains exposed even if the display housing 2 is closed with respect to the PC housing 1. Hence, the notebook PC can accomplish radio communication with other apparatuses even if the display housing 2 is not opened with respect to the PC housing 1.

All embodiments described above have a card-holding section 6 that are designed to hold a SD card 20. Nevertheless, the card-holding section according to the invention is not limited to one for holding a SD card. The present invention can be applied to card-holding sections configured to hold a small memory card, a small I/O card and a card of PCMCIA (Personal Computer Memory Card International Association) type.

## Claims

1. A data-processing apparatus **characterized by** comprising:
a main housing (1) having an input device on a surface;
a display housing (2) connected to the main housing and configured to rotate between a closed position and an opened position, said display housing covering the input device while remaining at the closed position and exposing the input device while remaining at the opened position;
a card-holding section (6) provided in the surface of the display housing, for holding a card (20); and
contacts (9) provided in the card-holding section and configured to contact a connector (21) provided on the card.

2. The data-processing apparatus according to claim 1, **characterized in that** a display panel (5) is provided on the front (2a) of the display housing (2) and the card-holding section (6) comprises a plurality of card-holding units (6a, 6b, ···) that are provided in a right-side part of the front (2a) and arranged side by side in a vertical direction.

3. The data-processing apparatus according to claim 1, **characterized in that** the contacts (9) are provided at an upper edge of the card-holding section (6), and the card-holding section has an elastic member (8) at a lower edge, said elastic member configured to push up the card toward the contacts.

4. The data-processing apparatus according to claim 1, **characterized in that** the contacts (9) are provided at an upper edge of the card-holding section (6), and the card-holding section has an elastic member (8) at an upper edge, said elastic member configured to push down the card toward the contacts.

5. The data-processing apparatus according to claim 1, **characterized in that** the contacts (9) are provided at one of left and right edges of the card-holding section (6), and the card-holding section has an elastic member at the other of the left and right edges, said elastic member configured to be push the card toward the contacts.

6. The data-processing apparatus according to claim 1, **characterized by** further comprising a cover (25) configured to be fitted in and removed from the card-holding section (7).

7. The data-processing apparatus according to claim 6, **characterized in that** the cover (25) is made of transparent or translucent material.

8. The data-processing apparatus according to claim 6, **characterized in that** the cover (25) is made of tinted transparent.

9. The data-processing apparatus according to claim 6, **characterized in that** the cover (25) has a radio antenna (31) and contacts (32) configured to connect the radio antenna (31) to the card 20.

10. The data-processing apparatus according to claim 1, **characterized in that** the card-holding section (6) is configured to hold a SD (Secure Digital) card (20).

11. A data-processing apparatus **characterized by** comprising:
a main housing (1) having an input device on a surface;
a display housing (2) connected to the main housing and configured to rotate between a closed position and an opened position, said display housing covering the input device while remaining at the closed position and exposing the input device while remaining at the opened position;
at least one card-holding section (6) provided in the surface of the display housing and having an opening at a front and side of the display housing, through which a card (20) is to be inserted into and removed from the card-holding section, at said side of the display housing; and
contacts (9) provided in the at least one card-holding section and configured to contact a connector provided on the card.

12. A data-processing apparatus **characterized by** comprising:
a main housing (1) having an input device on a surface;
a display housing (2) connected to the main housing and configured to rotate between a closed position and an opened position, said display housing covering the input device while remaining at the closed position and exposing the input device while remaining at the opened position;
a card-holding section (6) provided in the surface of the display housing and having an opening at a front and upper edge of the display housing, through which a card is to be inserted into and removed from the card-holding section, at said upper edge of the display housing; and
contacts (9) provided in the card-holding section and configured to contact a connector provided on the card.

13. The data-processing apparatus according to claim 11 or claim 12, **characterized by** further comprising a cover (25) configured to be fitted in and removed from the opening (7).

14. The data-processing apparatus according to claim 13, **characterized in that** the cover (25) is made of transparent or translucent material.

15. The data-processing apparatus according to claim 13, **characterized in that** the cover (25) is made of tinted transparent.

16. The data-processing apparatus according to claim 13, **characterized in that** the cover (25) has a radio antenna (31) and contacts (32) configured to connect the radio antenna (31) to the card (20).

17. The data-processing apparatus according to claim 11 or claim 12, **characterized in that** the card-holding section (6) is configured to hold a SD (Secure Digital) card (20).

18. A data-processing apparatus **characterized by** comprising:
a main housing (1) having an input device on a surface;
a display housing (2) connected to the main housing and configured to rotate between a closed position and an opened position, said display housing covering the input device while remaining at the closed position and exposing the input device while remaining at the opened position;
a plurality of card-holding sections (6a, 6b) provided in the display housing, for holding cards (20a, 20b), said card-holding sections having openings at a front and back of the display housing, respectively; and
contacts (9) provided in the card-holding sections and configured to contact connectors provided on the cards.

19. The data-processing apparatus according to claim 18, **characterized in that** the card-holding sections (6a, 6b) are configured to hold a SD (Secure Digital) card (29) each.
